# EUROPEAN PATENT APPLICATION

(11) **EP 4 825 541 A1**
(43) Date of publication of application: **21.10.2026**
(21) Application number: 26167911.2
(22) Date of filing: 26.03.2026
(51) Int. Cl.: B25J 9/16, B25J 18/06

(54) **SYSTEM AND METHOD FOR CONTROLLING A CONTINUUM ROBOT WHILST INSPECTING OR REPAIRING A COMPONENT**

(30) Priority: 16.04.2025 GB 202505723
(71) Applicant: Rolls-Royce plc, London N1 9FX (GB)
(72) Inventor: Norton, Andrew D, Derby, DE24 8BJ (GB); Wild, Samuel P, Derby, DE24 8BJ (GB); Dong, Xin, Derby, DE24 8BJ (GB)
(74) Representative: Rolls-Royce plc

(57) **Abstract**

A system (100, 200, 300, 700) for controlling a continuum robot (102, 202, 302, 702) whilst inspecting or repairing a component (104) includes a first sensor (106, 206, 306, 706) that includes a Fibre Bragg grating (FBG) sensor to indicate a curvature of the first sensor and a second sensor (116, 216, 316, 716) that includes a Fibre Bragg grating (FBG) sensor to indicate a curvature of the second sensor. The system further includes a controller (122) configured to determine a current shape of the first sensor and the second sensor, determine a current shape of the continuum robot, and adjust the current shape of the continuum robot so that the current shape corresponds to a desired shape of the continuum robot.

## Description

### FIELD

This invention relates to a system and a method for controlling a continuum robot whilst inspecting or repairing a component.

### BACKGROUND

Continuum robots (CR) have emerged as versatile systems capable of intricate maneuvers and operations in complex environments including on-wing (in-situ) inspection and repair of components such as those associated with gas turbine engines. Such CRs are typically tendon driven. The aforesaid snake-like robots can contort to navigate obstacle-ridden environments. However, it is difficult to establish precise sensing and control of the CRs that is essential for crucial industrial adoption. For example, due to lack of accuracy in determination of a shape of the CRs during an inspection or repair operation, reliable in-situ closed-loop control of CRs is challenging, which may hinder their widespread adoption. A common challenge in CRs is twists and/or torsion. The twist is due to an unintended axial rotation caused by asymmetrical actuation of tendons, and/or routing and/or kinematics of the CRs. The twists can degrade an accuracy in detecting a current shape of the CRs and may complicate control algorithms for the CRs. Conventional methods of determining the twist in the CRs involve complex models or empirical methods that may not fully capture effects of tendon placement and tension. Some conventional CRs address the issue of torsion partially, but fail to compensate for multi-directional twists or local curvature variations in the CR.

Therefore, there exists a need for an improved technique for addressing the abovementioned shortcomings and develop a CR that can be controlled as per desired requirements for inspecting or repairing components.

### SUMMARY

In a first aspect, there is provided a system for controlling a continuum robot whilst inspecting or repairing a component. The system includes a first sensor that includes a Fibre Bragg grating (FBG) sensor and is coupled to the continuum robot. The first sensor is configured to indicate a curvature of the first sensor relative to a reference point of the continuum robot. The first sensor is disposed in a helical arrangement relative to a central axis of the continuum robot. The first sensor extends along a first helical direction relative to the central axis. The system further includes a second sensor that includes a Fibre Bragg grating (FBG) sensor and is coupled to the continuum robot. The second sensor is configured to indicate a curvature of the second sensor relative to the reference point of the continuum robot. The second sensor is disposed in a helical arrangement relative to the central axis of the continuum robot. The second sensor extends along a second helical direction relative to the central axis that is different from the first helical direction. The system further includes a controller communicably coupled with the first sensor and the second sensor. The controller is configured to receive, from the first sensor, the curvature of the first sensor relative to the reference point on the continuum robot. The controller is further configured to receive, from the second sensor, the curvature of the second sensor relative to the reference point of the continuum robot. The controller is further configured to determine a current shape of the first sensor based at least on the curvature of the first sensor. The controller is further configured to determine a current shape of the second sensor based at least on the curvature of the second sensor. The controller is further configured to determine a current shape of the continuum robot based at least on the current shape of the first sensor and the second sensor. The controller is further configured to adjust the current shape of the continuum robot so that the current shape corresponds to a desired shape of the continuum robot based at least on the determination of the current shape of the continuum robot.

The system described herein improves a shape sensing/ control accuracy of the continuum robot by adjusting the current shape of the continuum robot to the desired shape based on the determination of the current shape of the continuum robot. The helical arrangements of the first sensor and the second sensor may reduce twists and/or torsion in the continuum robot. The helical arrangements of the first sensor and the second sensor may also reduce damping, and thus, the system may apply where friction is a concern, due to longer path lengths, usage of lubricants, usage of coatings, and/or usage of low-friction channel liners. The system may correct the shape of the continuum robot without the need of a complex, or data-driven methods, thereby enabling repeatability and robustness.

Based on incorporation of the first and second sensors, each winding in the opposite helical direction, torsional strains that accumulate in one of the first and second sensors is partially offset in the other. Thus, the first sensor and the second sensor that are wound in opposing helical arrangements (i.e., along opposing helical directions) relative to the central axis of the continuum robot may reduce or offset torsional loads, twisting, and/or curving moments in the continuum robot. Further, the system compensates for multi-directional twists or variations in local curvature in the continuum robot based on an offset of torsional strains that accumulate in any one of the first sensor and second sensor with the other.

Further, the system works well for continuum robots, and/or any other flexible string-like device that may be used in inspection and repair of components of engines, automobiles, aerospace applications, medicinal applications, or any other environments. Some examples of application of the system of the present invention may include minimally invasive surgery, search and rescue operations, and so on. Further, the system may provide shape sensing of flexible robots (such as, pneumatically actuated or concentric tube robots), flexible devices (such as, an endoscope or a borescope), and so on. The system may work well for active continuum robots possessing both an active and a passive section, such as Continuum Robot for Flexible Operations (COBRA) robot. The system may operate in real-time during the repair or inspection of the component and may allow monitoring and optimizing of the repair operation being performed on the component. Further, the system may enhance a service life of the continuum robot via reduction in wear and tear of the components of the continuum robot such as tendons of the continuum robot. Furthermore, the system may enhance a performance of the inspection or repair of the component. Specifically, the system may provide a balanced torque in the continuum robot that is essential for symmetrical or coordinated movements during inspection or repair of the component.

In some embodiments, each of the first sensor and the second sensor includes a single-core FBG sensor, a multi-core FBG sensor, or a FBG sensor including multiple core fibres. The FBG sensors may be used for enhanced proprioception of continuum robots because of their small diameter, flexibility, and immunity to electromagnetic interference, which may enable accurate indication of the curvature of the first sensor and the curvature of the second sensor relative to the reference point of the continuum robot.

The first sensor and the second sensor provide an enriched dataset corresponding to indications of the curvature of the first sensor and the second sensor relative to the reference point of the continuum robot. This may allow accurate determination of the curvature of the first sensor as well as the second sensor.

In some embodiments, the curvature of each of the first sensor and the second sensor is determined along each of an X-axis, a Y-axis, and a Z-axis of the continuum robot. The determination of the curvature of the first sensor and the second sensor along each of the X-axis, the Y-axis, and the Z-axis of the continuum robot may provide for the accurate determination of the curvature of the first sensor and the second sensor.

In some embodiments, the first helical direction includes a clockwise direction relative to the central axis of the continuum robot and the second helical direction includes an anticlockwise direction relative to the central axis.

In some embodiments, the first helical direction includes an anticlockwise direction relative to the central axis of the continuum robot and the second helical direction includes a clockwise direction relative to the central axis.

The opposing helical directions of the first sensor and the second sensor may cancel/ reduce the torsion in the continuum robot, which may in turn provide a robust force transmission during the inspection or repair of the component.

In some embodiments, the continuum robot includes a backbone having a plurality of vertebrae and a plurality of tendons circumferentially arranged around the backbone at various angular positions. The first sensor and the second sensor are disposed proximal to the backbone of the continuum robot and/or proximal to an outer surface defined by the continuum robot. Thus, the system of the present invention may be used to adjust the shape of different types of tendon-driven robots.

In some embodiments, the plurality of tendons include a first tendon disposed in the helical arrangement relative to the central axis of the continuum robot. The first tendon extending along the first helical direction relative to the central axis. The first sensor is coupled to the first tendon. The plurality of tendons further include a second tendon disposed in the helical arrangement relative to the central axis. The second tendon extending along the second helical direction relative to the central axis. The second sensor is coupled to the second tendon. The coupling of the first tendon and the second tendon with the first sensor and the second sensor, respectively, may ensure precise consideration of dynamics of tendons such as direct forces exerted by the tendons, leading to accurate indications of the curvature of the first sensor and the second sensor.

In some embodiments, the first sensor is a tendon from the plurality of tendons and the second sensor is another tendon from the plurality of tendons. Specifically, the first and second sensors themselves operate as tendons of the continuum robot and may be used to control a movement of the continuum robot.

In some embodiments, the reference point is defined at the backbone of the continuum robot. The indications of the curvatures of the first sensor and the second sensor relative to the backbone of the continuum robot may simplify the determination of the curvatures of the first sensor and the second sensor.

In some embodiments, the controller is configured to determine at least one of a twist in the continuum robot and a torsion in the first sensor and the second sensor. The controller is further configured to determine the current shape of the continuum robot based at least on the current shape of the first sensor, the current shape of the second sensor, and at least one of the twist in the continuum robot and the torsion in the first sensor and the second sensor.

The controller may determine at least one of the twist in the continuum robot based at least on the twist and/or the torsion in the first sensor and the second sensor. The controller may determine the twist and/or the torsion in the first sensor and the second sensor based at least on the curvature of the first sensor and the curvature of the second sensor. Determination of the current shape of the continuum robot using the current shape of the first sensor, the current shape of the second sensor, and at least one of the twist in the continuum robot and the torsion in the first and second sensors may generate accurate and reliable results for the current shape of the continuum robot. Thus, the system may be used for tendon-driven continuum robots that are subjected to twist and/or torsion during the repair or inspection of the component.

In some embodiments, the controller is configured to determine a first curvature angle of the first sensor. The controller is further configured to determine a second curvature angle of the second sensor. The controller is further configured to determine the current shape of the continuum robot based at least on the first curvature angle and the second curvature angle. The first curvature angle and the second curvature angle are of importance in accurately determining the current shape of the continuum robot. The accurate determination of the current shape of the continuum robot during the inspection or repair of the component may be used to determine deviations of the current shape from the desired shape, which may be in turn used to control the continuum robot whilst the inspection or repair of the component.

In some embodiments, the component is a gas turbine engine component. The system may be used for controlling the continuum robot for inspecting or repairing various components associated with the gas turbine engine that have complex geometry and are difficult to access.

In some embodiments, the first sensor has a first pitch angle and the second sensor has a second pitch angle. The first pitch angle is same as the second pitch angle or the first pitch angle is different from the second pitch angle.

In some embodiments, the first sensor has a first cross-sectional area, and the second sensor has a second cross-sectional area. The first cross-sectional area is same as the second cross-sectional area or the first cross-sectional area is different from the second cross-sectional area.

In a second aspect, there is provided a method for controlling a continuum robot whilst inspecting or repairing a component. The method includes indicating, by a first sensor coupled to the continuum robot, a curvature of the first sensor relative to a reference point of the continuum robot. The first sensor being disposed in a helical arrangement relative to a central axis of the continuum robot, and the first sensor extending along a first helical direction relative to the central axis. The method further includes indicating, by a second sensor coupled to the continuum robot, a curvature of the second sensor relative to the reference point of the continuum robot. The second sensor being disposed in a helical arrangement relative to the central axis of the continuum robot, and the second sensor extending along a second helical direction relative to the central axis that is different from the first helical direction. The method further includes receiving, from the first sensor, the curvature of the first sensor relative to the reference point of the continuum robot. The method further includes receiving, from the second sensor, the curvature of the second sensor relative to the reference point of the continuum robot. The method further includes determining a current shape of the first sensor based at least on the curvature of the first sensor. The method further includes determining a current shape of the second sensor based at least on the curvature of the second sensor. The method further includes determining a current shape of the continuum robot based at least on the current shape of the first sensor and the second sensor. The method further includes adjusting the current shape of the continuum robot so that the current shape corresponds to a desired shape of the continuum robot based at least on the determination of the current shape of the continuum robot.

The method described herein improves a shape sensing/ control accuracy of the continuum robot by adjusting the current shape of the continuum robot to the desired shape based on the determination of the current shape of the continuum robot. The helical arrangements of the first sensor and the second sensor reduces twists and/or torsion in the continuum robot. The helical arrangements of the first sensor and the second sensor may also reduce damping, and thus, the method may apply where friction is a concern, due to longer path lengths, usage of lubricants, usage of coatings, and/or usage of low-friction channel liners. The method may correct the shape of the continuum robot without the need of a complex, or data-driven methods, thereby enabling repeatability and robustness.

Based on incorporation of the first and second sensors, each winding in the opposite helical direction, torsional strains that accumulate in one of the first and second sensors is partially offset in the other. Thus, the first sensor and the second sensor that are wound in opposing helical arrangements (i.e., along opposing helical directions) relative to the central axis of the continuum robot may reduce or offset torsional loads, twisting, and/or curving moments in the continuum robot. Further, the method compensates for multi-directional twists or variations in local curvature in the continuum robot based on an offset of torsional strains that accumulate in any one of the first sensor and the second sensor with the other.

Further, the method works well for continuum robots, and/or any other flexible string-like device that may be used in inspection and repair of components of engines, automobiles, aerospace applications, medicinal applications, or any other environments. Some examples of application of the method of the present invention may include minimally invasive surgery, search and rescue operations, and so on. Further, the method may provide shape sensing of flexible robots (such as, pneumatically actuated or concentric tube robots), flexible devices (such as, an endoscope or a borescope), and so on. The method may work well for active continuum robots possessing both an active and a passive section, such as Continuum Robot for Flexible Operations (COBRA) robot. The method may operate in real-time during the repair or inspection of the component and may allow monitoring and optimizing of the repair operation being performed on the component. Further, the method may enhance a service life of the continuum robot via reduction in wear and tear of the components of the continuum robot such as tendons of the continuum robot. Furthermore, the method may enhance a performance of the inspection or repair of the component. Specifically, the method may provide a balanced torque in the continuum robot that is essential for symmetrical or coordinated movements during inspection or repair of the component.

In some embodiments, the method further includes determining a first curvature angle of the first sensor. The method further includes determining a second curvature angle of the second sensor. The method further includes determining the current shape of the continuum robot based at least on the first curvature angle and the second curvature angle. The first curvature angle and the second curvature angle are of importance in determining the current shape of the continuum robot. The accurate sensing of the current shape of the continuum robot during the inspection or repair of the component provides for the exact deviations of the current shape from the desired shape. The consideration of the aforesaid deviations improves the control of the continuum robot whilst the inspection or repair of the component.

Each of the first sensor and the second sensor includes a fibre Bragg grating (FBG) sensor. The FBG sensors may be used for enhanced proprioception of continuum robots because of their small diameter, flexibility, and immunity to electromagnetic interference, which may enable accurate indication of the curvature of the first sensor and the curvature of the second sensor relative to the reference point of the continuum robot.

In some embodiments, the method further includes determining at least one of a twist in the continuum robot and a torsion in the first sensor and the second sensor. The method further includes determining the current shape of the continuum robot based at least on the current shape of the first sensor, the current shape of the second sensor, and at least one of the twist in the continuum robot and the torsion in the first sensor and the second sensor. The controller may determine at least one of the twist in the continuum robot based at least on the twist and/or the torsion in the first sensor and the second sensor. The controller may determine the twist and/or the torsion in the first sensor and the second sensor based at least on the curvature of the first sensor and the curvature of the second sensor. Determination of the current shape of the continuum robot using the current shape of the first sensor, the current shape of the second sensor, and at least one of the twist in the continuum robot and the torsion in the first and second sensors may generate accurate and reliable results for the current shape of the continuum robot. Thus, the method may be used for tendon-driven continuum robots that are subjected to twist and/or torsion during the repair or inspection of the component.

In some embodiments, the continuum robot includes a backbone having a plurality of vertebrae and a plurality of tendons circumferentially arranged around the backbone at various angular positions. The plurality of tendons includes a first tendon disposed in the helical arrangement relative to the central axis of the continuum robot. The first tendon extends along the first helical direction relative to the central axis. The first sensor is coupled to the first tendon. The plurality of tendons further includes a second tendon disposed in the helical arrangement relative to the central axis. The second tendon extends along the second helical direction relative to the central axis. The second sensor is coupled to the second tendon. The coupling of the first tendon and the second tendon with the first sensor and the second sensor, respectively, may ensure precise consideration of dynamics of tendons such as direct forces exerted by the tendons, leading to accurate indications of the curvature of the first sensor and the second sensor.

In some embodiments, the continuum robot includes a backbone having a plurality of vertebrae and a plurality of tendons circumferentially arranged around the backbone at various angular positions. The first sensor is a tendon from the plurality of tendons and the second sensor is another tendon from the plurality of tendons. Specifically, the first and second sensors themselves operate as tendons of the continuum robot and may be used to control a movement of the continuum robot.

In some embodiments, the first helical direction includes a clockwise direction relative to the central axis of the continuum robot and the second helical direction includes an anticlockwise direction relative to the central axis.

In some embodiments, the first helical direction includes an anticlockwise direction relative to the central axis of the continuum robot and the second helical direction includes a clockwise direction relative to the central axis.

The opposing helical directions of the first sensor and the second sensor may cancel/ reduce the torsion in the continuum robot, which may in turn provide a robust force transmission during the inspection or repair of the component.

The details of one or more examples of the invention are set forth in the accompanying drawings and the description below. Other features, objects, and advantages of the invention will be apparent from the description and drawings, and from the claims.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

### BRIEF DESCRIPTION OF THE DRAWINGS

Embodiments will now be described by way of example only, with reference to the Figures, in which:
**FIG. 1** shows a sectional side view of a gas turbine engine;
**FIG. 2A** shows a schematic perspective view of a system for controlling a continuum robot whilst inspecting or repairing a component, in accordance with an embodiment of the present invention;
**FIG. 2B** shows a schematic perspective view of a system for controlling a continuum robot whilst inspecting or repairing the component, in accordance with another embodiment of the present invention;
**FIG. 2C** shows a schematic perspective view of a system for controlling a continuum robot whilst inspecting or repairing the component, in accordance with yet another embodiment of the present invention;
**FIG. 3** shows a schematic perspective view of the continuum robot of FIG. 2A with a first sensor and a second sensor disposed in helical arrangements;
**FIG. 4** shows a schematic cross-sectional view of the continuum robot of FIG. 2A depicting start points of the first sensor and the second sensor;
**FIG. 5A** illustrates a first pitch and a first radius of the first sensor of FIG. 2A;
**FIG. 5B** illustrates a first pitch angle of the first sensor of FIG. 2A;
**FIG. 6A** illustrates a second pitch and a second radius of the second sensor of FIG. 2A;
**FIG. 6B** illustrates a second pitch angle of the second sensor of FIG. 2A;
**FIG. 7** shows a block diagram of a system for controlling the continuum robot whilst inspecting or repairing the component; and
**FIGS. 8A** **and** **8B** show a flowchart of a method for controlling the continuum robot whilst inspecting or repairing the component.

### DETAILED DESCRIPTION

Aspects and embodiments of the present invention will now be discussed with reference to the accompanying figures. Further aspects and embodiments will be apparent to those skilled in the art.

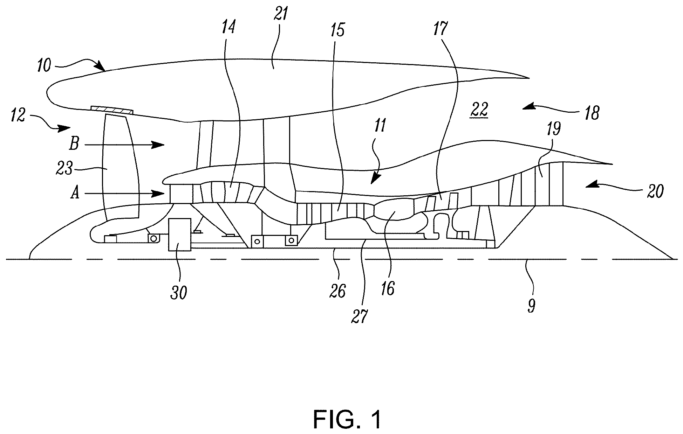

**FIG. 1** illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high pressure compressor 15, combustion equipment 16, a high pressure turbine 17, a low pressure turbine 19, and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26 and an epicyclic gearbox 30.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the core exhaust nozzle 20 to provide some propulsive thrust. The high pressure turbine 17 drives the high pressure compressor 15 by a suitable interconnecting shaft 27. The fan 23 generally provides the majority of the propulsive thrust. The epicyclic gearbox 30 is a reduction gearbox.

Note that the terms "low pressure turbine" and "low pressure compressor" as used herein may be taken to mean the lowest pressure turbine stages and lowest pressure compressor stages (i.e., not including the fan 23) respectively and/or the turbine and compressor stages that are connected together by the interconnecting shaft 26 with the lowest rotational speed in the engine (i.e., not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

Other gas turbine engines to which the system and method of the present invention may be applied may have alternative configurations. For example, such engines may have an alternative number of compressors and/or turbines and/or an alternative number of interconnecting shafts. By way of further example, the gas turbine engine 10 shown in FIG. 1 has a split flow nozzle 18, 20 meaning that the flow through the bypass duct 22 has its own nozzle 18 that is separate to and radially outside the core exhaust nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the disclosure may apply, for example, to any type of gas turbine engine, such as an open rotor (in which the fan stage is not surrounded by a nacelle) or turboprop engine, for example. In some arrangements, the gas turbine engine 10 may not comprise a gearbox 30.

The geometry of the gas turbine engine 10, and components thereof, is defined by a conventional axis system, comprising an axial direction (which is aligned with the rotational axis 9), a radial direction (in the bottom-to-top direction in FIG. 1), and a circumferential direction (perpendicular to the page in the FIG. 1 view). The axial, radial, and circumferential directions are mutually perpendicular.

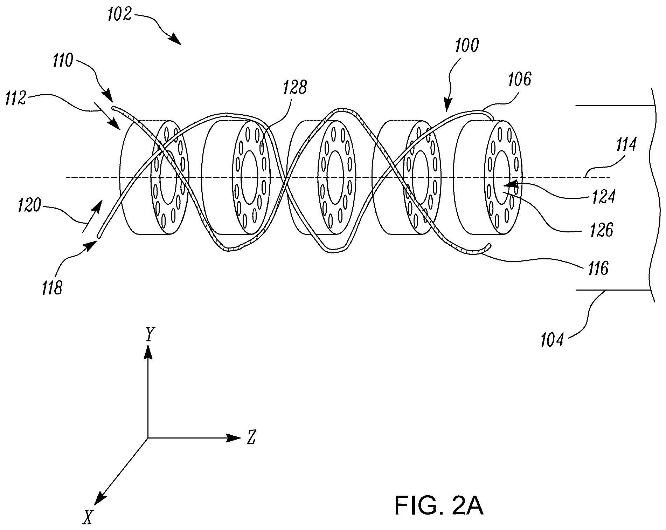

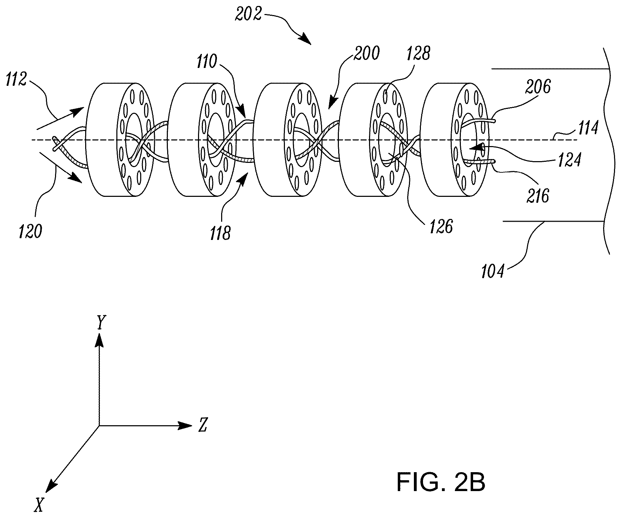

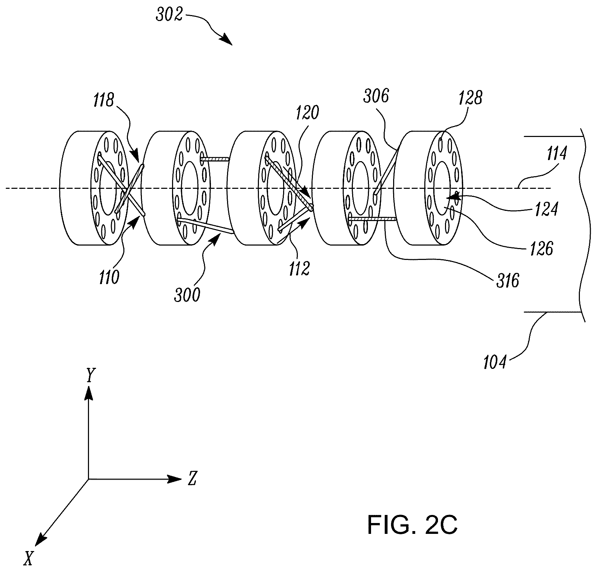

**FIGS. 2A****,** **2B****, and** **2C** show schematic perspective views of a continuum robot 102, 202, 302. Referring to FIGS. 2A to 2C, the present invention relates to a system 100, 200, 300 for controlling the continuum robot 102, 202, 302 whilst inspecting or repairing a component 104. In an embodiment, the component 104 is the gas turbine engine 10 (shown in FIG. 1) component. The component 104 may be the turbine 17, 19 (shown in FIG. 1), the compressor 14, 15 (shown in FIG. 1), the combustion equipment 16 (shown in FIG. 1), and the like. The system 100, 200, 300 may be used for controlling the continuum robot 102, 202, 302 whilst inspecting or repairing various components associated with the gas turbine engine 10 that typically have complex geometry and are difficult to access. In an embodiment, the continuum robot 102, 202, 302 includes a backbone 124 having a plurality of vertebrae 126 and a plurality of tendons 128 circumferentially arranged around the backbone 124 at various angular positions. Thus, the system 100, 200, 300 of the present invention may be used to adjust the shape of different types of tendon-driven robots.

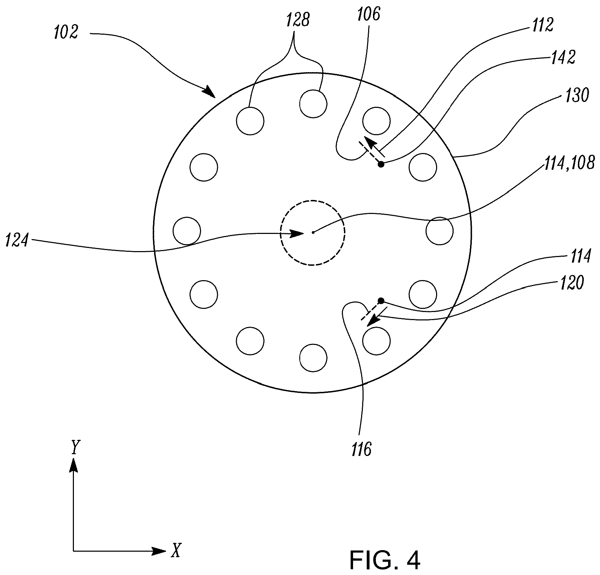

Referring now to FIG. 2A, the system 100 includes a first sensor 106 coupled to the continuum robot 102. The first sensor 106 is configured to indicate a curvature of the first sensor 106 relative to a reference point 108 (shown in FIG. 4) of the continuum robot 102. The first sensor 106 is disposed in a helical arrangement 110 relative to a central axis 114 of the continuum robot 102. The first sensor 106 extends along a first helical direction 112 relative to the central axis 114. In an embodiment, the reference point 108 is defined at the backbone 124 of the continuum robot 102.

The system 100 also includes a second sensor 116 coupled to the continuum robot 102. The second sensor 116 is configured to indicate a curvature of the second sensor 116 relative to the reference point 108 of the continuum robot 102. The second sensor 116 is disposed in the helical arrangement 118 relative to the central axis 114 of the continuum robot 102. The second sensor 116 extends along the second helical direction 120 relative to the central axis 114 that is different from the first helical direction 112.

The indications of the curvature of the first sensor 106 and the curvature of the second sensor 116 relative to the backbone 124 of the continuum robot 102 may simplify the determination of the curvature of the first sensor 106 and the curvature of the second sensor 116.

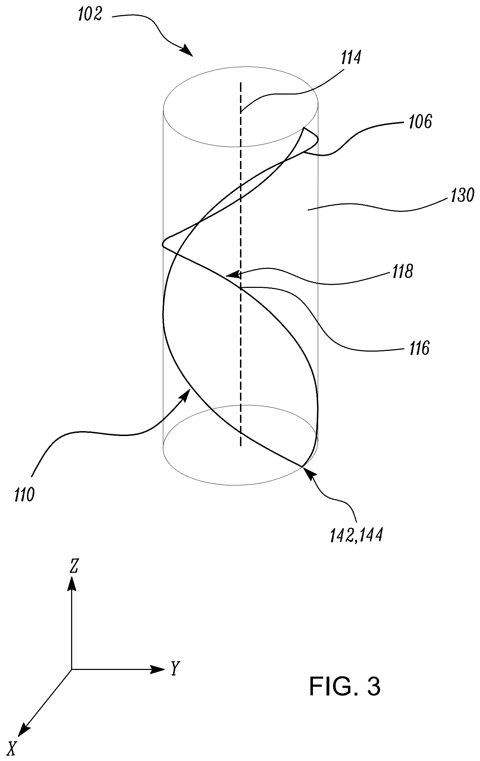

In the illustrated embodiment of FIG. 2A, the first sensor 106 is a tendon from the plurality of tendons 128 and the second sensor 116 is another tendon from the plurality of tendons 128. Specifically, the first and second sensors 106, 116 themselves operate as tendons of the continuum robot 102, and may be used to control a movement of the continuum robot 102. In the illustrated embodiment of FIG. 2A, the first sensor 106 and the second sensor 116 are disposed proximal to an outer surface 130 (shown in FIG. 3) defined by the continuum robot 102. It should be noted that the first sensor 106 and the second sensor 116 are disposed within the continuum robot 102.

**FIG. 3** shows a schematic perspective view of the continuum robot 102 of FIG. 2A with the first sensor 106 and the second sensor 116 disposed in the helical arrangements 110, 118.

**FIG. 4** shows a schematic cross-sectional view of the continuum robot 102 of FIG. 2A depicting start points 142, 144 of the first sensor 106 and the second sensor 116.

Referring to FIGS. 2A and 3, in an embodiment, the first helical direction 112 includes a clockwise direction relative to the central axis 114 of the continuum robot 102 and the second helical direction 120 includes an anticlockwise direction relative to the central axis 114.

Referring to FIG. 4, in another embodiment, the first helical direction 112 includes the anticlockwise direction relative to the central axis 114 of the continuum robot 102 and the second helical direction 120 includes the clockwise direction relative to the central axis 114.

The helical arrangement 110 of the first sensor 106 and the helical arrangement 118 of the second sensor 116 may reduce twists and/or torsion in the continuum robot 102. The helical arrangement 110 of the first sensor 106 and the helical arrangement 118 of the second sensor 116 may also reduce damping, and thus, the system 100 may apply where friction is a concern, due to longer path lengths, usage of lubricants, usage of coatings, and/or usage of low-friction channel liners.

The opposing helical directions 112, 120 of the first sensor 106 and the second sensor 116 may cancel/ reduce the twists and/or the torsion in the continuum robot 102, which may in turn provide a robust force transmission during the inspection or repair of the component 104.

In an embodiment, the system 100 may further includes a third fiber disposed in a straight arrangement for actuating or sensing the continuum robot 102 along with the helical arrangement 110 of the first sensor 106 and the helical arrangement 118 of the second sensor 116.

Referring again to FIG. 2A, in an embodiment, each of the first sensor 106 and the second sensor 116 includes a fibre Bragg grating (FBG) sensor. In an embodiment, each of the first sensor 106 and the second sensor 116 includes a single-core FBG sensor, a multi-core FBG sensor, or a FBG sensor including multiple core fibres. The FBG sensor includes an optical fibre. The optical fibre has at least one FBG positioned at a joint within the continuum robot 102. If a bundle of fibres is used, a FBG may be present at a point corresponding to joint positions. A Fibre Bragg grating includes an optical fibre that has a distributed Bragg reflector constructed within a short segment thereof. The Bragg reflector allows certain wavelengths to pass and others to be reflected. The FBG sensors can be used to determine the curvature of the first sensor 106 and the curvature of the second sensor 116, based on strain distributions in each grating. As light passes through the optical fibre, it is reflected at each grating at a specific wavelength called the Bragg wavelength. The shift in the Bragg wavelengths can be used to determine the curvature of the first sensor 106 and the curvature of the second sensor 116.

The FBG sensors may be used for enhanced proprioception of continuum robots 102 because of their small diameter, flexibility, and immunity to electromagnetic interference, which may enable accurate indication of the curvature of the first sensor 106 and the curvature of the second sensor 116 relative to the reference point 108 of the continuum robot 102.

The first sensor 106 and the second sensor 116 may provide an enriched dataset corresponding to indication of the curvatures of the first sensor 106 and the second sensor 116 relative to the reference point 108 of the continuum robot 102. This may allow accurate determination of the curvature of the first sensor 106 and the curvature of the second sensor 116.

In an embodiment, the curvatures of each of the first sensor 106 and the second sensor 116 is determined along each of an X-axis, a Y-axis, and a Z-axis of the continuum robot 102.

The determination of the curvatures of the first sensor 106 and the second sensor 116 along each of the X-axis, the Y-axis, and the Z-axis of the continuum robot 102 may provide for the accurate determination of the curvature of the first sensor 106 and the curvature of the second sensor 116.

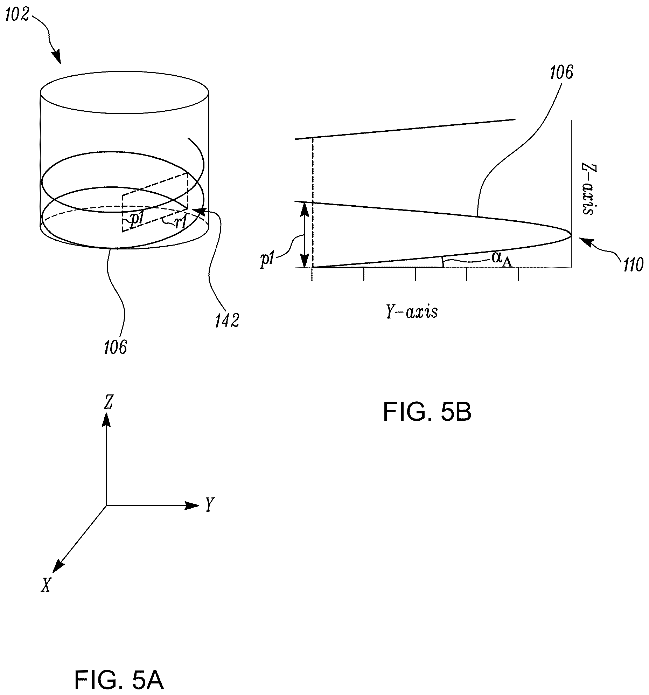

**FIG. 5A** illustrates a first pitch p1 and a first radius r1 of the first sensor 106.

**FIG. 5B** illustrates a first pitch angle *α_{A}* of the first sensor 106.

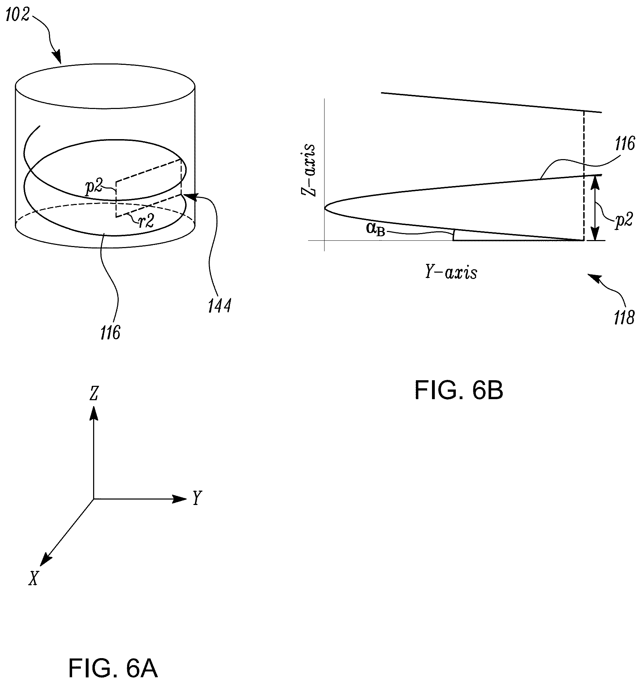

**FIG. 6A** illustrates a second pitch p2 and a second radius r2 of the second sensor 116.

**FIG. 6B** illustrates a second pitch angle *α_{B}* of the second sensor 116.

Referring to FIGS. 5A and 6A, in an embodiment, the first sensor 106 has the first pitch p1, and the second sensor 116 has the second pitch p2. The first pitch p1 may be same as the second pitch p2 or the first pitch p1 may be different from the second pitch p2. Moreover, in an embodiment, the first sensor 106 has the first radius r1 along the radial axis 114, and the second sensor 116 has the second radius r2 along the radial axis 114. The first radius r1 may be same as the second radius r2 or the first radius r1 may be different from the second radius r2.

Referring to FIGS. 5B and 6B, in an embodiment, the first sensor 106 has the first pitch angle *α_{A}* and the second sensor 116 has the second pitch angle *α_{B}.* The first pitch angle *α_{A}* may be same as the second pitch angle *α_{B}* or the first pitch angle *α_{A}* may be different from the second pitch angle *α_{B}.*

In an embodiment, the first sensor 106 has a first cross-sectional area, and the second sensor 116 has a second cross-sectional area. The first cross-sectional area may be same as the second cross-sectional area or the first cross-sectional area may be different from the second cross-sectional area.

Referring now to FIG. 2B, the system 200 includes a first sensor 206 and a second sensor 216. The system 200 is substantially similar to the system 100 (see FIG. 2A) with common components referred to by the same numeral. The first and second sensors 206, 216 are substantially similar to the first and second sensors 106, 116 explained in relation to FIGS. 2A, and 3 to 6. However, the first sensor 206 and the second sensor 216 are disposed proximal to the backbone 124 of the continuum robot 202.

Referring now to FIG. 2C, the system 300 includes a first sensor 306 and a second sensor 316. The system 300 is substantially similar to the system 100 (see FIG. 2A) with common components referred to by the same numeral. The first and second sensors 306, 316 are substantially similar to the first and second sensors 106, 116 explained in relation to FIGS. 2A, and 3 to 6. However, the first sensor 306 and the second sensor 316 are disposed between the backbone 124 and the outer surface 130 defined by the continuum robot 302. Specifically, some portions of the first sensor 306 are disposed proximal to the outer surface 130 and some portions of the first sensor 306 are disposed proximal to the backbone 124. Similarly, some portions of the second sensor 316 are disposed proximal to the outer surface 130 and some portions of the second sensor 316 are disposed proximal to the backbone 124.

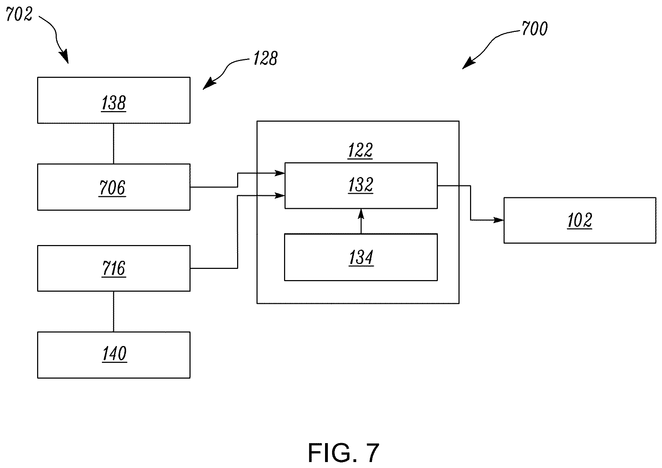

**FIG. 7** illustrates a system 700 for controlling a continuum robot 702 whilst inspecting or repairing the component 104 (see FIG. 2A). The system 700 is substantially similar to the system 100 (see FIG. 2A) with common components referred to by the same numeral. The continuum robot 702 is substantially similar to the continuum robot 102 (see FIG. 2A) with common components referred to by the same numeral. The system 700 includes a first sensor 706 and a second sensor 716. The first and second sensors 706, 716 are substantially similar to the first and second sensors 106, 116 explained in relation to FIGS. 2A, and 3 to 6. The first sensor 706 is disposed in the helical arrangement 110 (see FIG. 2A) relative to the central axis 114 (see FIG. 2A) of the continuum robot 702. The first sensor 706 extends along the first helical direction 112 (see FIG. 2A) relative to the central axis 114. Further, the second sensor 716 is disposed in the helical arrangement 118 (see FIG. 2A) relative to the central axis 114. The second sensor 716 extends along the second helical direction 120 (see FIG. 2A) relative to the central axis 114.

In an embodiment, the plurality of tendons 128 include a first tendon 138. The first tendon 138 is disposed in the helical arrangement 110 relative to the central axis 114 of the continuum robot 702. The first tendon 138 extends along the first helical direction 112 relative to the central axis 114. In the illustrated embodiment of FIG. 7, the first sensor 706 is coupled to the first tendon 138. The plurality of tendons 128 further include a second tendon 140. The second tendon 140 is disposed in the helical arrangement 118 relative to the central axis 114. The second tendon 140 extends along the second helical direction 120 relative to the central axis 114. In the illustrated embodiment of FIG. 7, the second sensor 716 is coupled to the second tendon 140.

The coupling of the first tendon 138 and the second tendon 140 with the first sensor 706 and the second sensor 716, respectively, ensures precise consideration of dynamics of the tendons 138, 140 such as direct forces exerted by the tendons 138, 140.

The system 700 further includes a controller 122 communicably coupled with the first sensor 706 and the second sensor 716. Each of the systems 100, 200, 300 (see FIGS. 2A to 2C) also includes the controller 122. The controller 122 is a device including hardware, software, or a combination of both along with memory. The controller 122 receives data and processes via processors, to manage the inspection or the repairing of the component 104. The controller 122 may include one or more processors 132 and one or more memories 134 in communication with the one or more processors 132. In some examples, the memories 134 may include a random access memory (RAM), such as synchronous dynamic random access memory (SDRAM), a read-only memory (ROM), a non-volatile random access memory (NVRAM), an electrically erasable programmable read-only memory (EEPROM), a FLASH memory, a magnetic or optical data storage media, and the like, that can be used to store various information or desired program codes in the form of instructions or data structures and that can be accessed by the processors 132.

Further, the processors 132 may execute various types of digitally stored instructions, such as software applications or algorithms, retrieved from the memories 134, or a firmware program which may enable the processors 132 to perform a wide variety of operations. It should be noted that the processors 132 may embody a single microprocessor or multiple microprocessors for receiving various input signals and generating output signals. Numerous commercially available microprocessors may perform the functions of the processors 132. Each of the processors 132 may further include a general processor, a central processing unit, an application specific integrated circuit (ASIC), a digital signal processor, a field programmable gate array (FPGA), a digital circuit, an analog circuit, a microcontroller, any other type of processor, or any combination thereof. Each of the processors 132 may include one or more elements that may be operable to execute computer executable instructions or computer code that may be stored and retrieved from the memories 134.

The controller 122 is configured to receive, from the first sensor 706, the curvature of the first sensor 706 relative to the reference point 108 (shown in FIG. 4) on the continuum robot 702.

The controller 122 is further configured to receive, from the second sensor 716, the curvature of the second sensor 716 relative to the reference point 108 of the continuum robot 702. The controller 116 receives the curvature of the first sensor 706 and the curvature of the second sensor 716 while the inspection or repair operation is being performed on the component 104.

The controller 122 is further configured to determine a current shape of the first sensor 706 based at least on the curvature of the first sensor 706. The controller 122 may use control algorithms and/or kinematics modelling to determine the current shape of the first sensor 706.

The controller 122 is further configured to determine a current shape of the second sensor 716 based at least on the curvature of the second sensor 716. The controller 122 may use control algorithms and/or kinematic modelling to determine the current shape of the second sensor 716.

The controller 122 is further configured to determine a current shape of the continuum robot 702 based at least on the current shape of the first sensor 706 and the second sensor 716. The controller 122 processes at least the current shape of the continuum robot 702 via for example, a Piecewise Constant Curvature (PCC) Model. This may allow accurate determination of the current shape of the continuum robot 702.

The controller 122 is further configured to adjust the current shape of the continuum robot 702 so that the current shape corresponds to a desired shape of the continuum robot 702 based at least on the determination of the current shape of the continuum robot 702. In some embodiments, the controller 122 may extract deviations of the current shape of the continuum robot 702 from the desired shape of the continuum robot 702 via a closed-loop control such as Proportional-Integral-Derivative Control or Model Predictive Control and accordingly adjusts the current shape of the continuum robot 702.

In some embodiments, the desired shape of the continuum robot 702 may be predetermined and stored in the memory 134 of the controller 122 for various possible motions and locations of the continuum robot 702 during the inspection or repair of the component 104.

In some examples, the current shape of the first sensor 706, the current shape of the second sensor 716, and/or the current shape of the continuum robot 702 may be computed by a user (instead of being determined by the controller 122) based on receipt of information from the first sensor 706, the second sensor 716, and also a know-how of other relevant parameters.

Adjusting the current shape of the continuum robot 702 so that the current shape corresponds to the desired shape of the continuum robot 702 may allow accurate control of the desired shape of the continuum robot 702 that is crucial during the repair or inspection of the component 104.

In an embodiment, the controller 122 is configured to determine at least one of a twist *τ*(*s*) in the continuum robot 702 and a torsion *τ_{f}*(*s*) in the first sensor 706 and the second sensor 716. The controller 122 may determine at least one of the twist *τ*(*s*) in the continuum robot 702, and the twists *τ*(*s*) and/or torsions *τ_{f},_{A}* (*s*)*, τ_{f},_{B}* (*s*) in the first sensor 706 and the second sensor 716 based at least on the curvature of the first sensor 706 and the curvature of the second sensor 716.

The controller 122 is further configured to determine the current shape of the continuum robot 702 based at least on the current shape of the first sensor 706, the current shape of the second sensor 716, and the at least one of the twist *τ*(*s*) in the continuum robot 702 and the torsion *τ_{f}*(*s*) in the first sensor 706 and the second sensor 716.

Determination of the current shape of the continuum robot 702 using the current shape of the first sensor 706, the current shape of the second sensor 716, and at least one of the twist *τ*(*s*) in the continuum robot 702 and the torsion *τ_{f}*(*s*) in the first sensor 706 and the second sensor 716 may generate accurate and reliable results for the current shape of the continuum robot 702. The system 700 may correct the shape of the continuum robot 702 without the need of a complex, or data-driven methods, thereby enabling repeatability and robustness. Thus, the system 700 may be used for tendon-driven continuum robots that are subjected to the twists and/or the torsions during the repair or inspection of the component 104.

The controller 122 may determine torsional strains *ε_{A}*(*s*), *ε_{B}*(*s*) in the first sensor 706 and the second sensor 716 based at least on the torsions *τ_{f},A (s), τ_{f},_{B} (s)* in the first sensor 706 and the second sensor 716.

In an embodiment, the controller 122 is configured to determine a first curvature angle *θ_{A}*(*s*) of the first sensor 706. The controller 122 may use mathematical modelling and/or sensor fusion techniques to determine the first curvature angle *θ_{A}*(*s*) of the first sensor 706 relative to, for example, the central axis 114 of the continuum robot 702.

The controller 122 is further configured to determine a second curvature angle *θ_{B}*(*s*) of the second sensor 716. The controller 122 may use mathematical modelling and/or the sensor fusion techniques, to determine the second curvature angle *θ_{B}*(*s*) of the second sensor 716 relative to, for example, the central axis of the continuum robot 702.

The controller 122 is further configured to determine the current shape of the continuum robot 702 based at least on the first curvature angle *θ_{A}*(*s*) and the second curvature angle *θ_{B}*(*s*). The first curvature angle *θ_{A}*(*s*) and the second curvature angle *θ_{B}*(*s*) are of importance in accurately determining the current shape of the continuum robot 702.

The accurate determination of the current shape of the continuum robot 702 during the inspection or repair of the component 104 may be used to determine deviations of the current shape from the desired shape, which may be in turn used to control the continuum robot 702 whilst the inspection or repair of the component 104.

Based on incorporation of the first and second sensors 706, 716, each winding in the opposite helical direction 112, 120, torsional strains *ε_{A}*(*s*), *ε_{B}*(*s*) that may accumulate in one of the first and second sensors 706, 716 is partially offset in the other. Specifically, the system 700 includes the first sensor and the second sensor 706, 716 in opposing helical arrangements (i.e., along opposing helical directions 112, 120) relative to the central axis 114 of the continuum robot 702 to reduce or offset torsional strains *ε_{A}*(*s*), *ε_{B}*(*s*), twisting, and/or curving moments in the continuum robot 702. Further, the system 700 compensates for multi-directional twists or variations in local curvature in the continuum robot 702 based on an offset of torsional strains *ε_{A}*(*s*), *ε_{B}*(*s*) that accumulate in any one of the first sensor and second sensor 706, 716 with the other. The mathematical presentation provided below may be used to determine curvatures and the torsional strains *ε_{A}*(*s*), *ε_{B}*(*s*).

### Dual Helical Arrangement Geometry:

For the helical arrangement 110 of the first sensor 706, a parameterisation *r_{A}*(*s*) of the first sensor 706 for the arc length *s* of the continuum robot 702 is parameterized as: ${r}_{A} \left(s\right) = \left[\begin{matrix}r cos \left({θ}_{A}\left(s\right)\right) \\ r sin \left({θ}_{A}\left(s\right)\right) \\ \frac{p}{2 π} {θ}_{A} \left(s\right)\end{matrix}\right]$ where, the first curvature angle *θ_{A}*(*s*) increases with the arc length *s* of the continuum robot 702, r is the radius of the helical arrangement 110 corresponding to the arc length *s*, and *p* is constant pitch of the helical arrangement 110.

For the helical arrangement 118 of the second sensor 716, a parameterisation *r_{B} (s)* of the second sensor 716 for the arc length *s* of the continuum robot 702 is parameterized in a similar manner, however with the second curvature angle *θ_{B}*(*s*) = -*θ_{A}*(*s*), for the same radius *r* and the pitch *p* of the helical arrangement 118. ${r}_{B} \left(s\right) = \left[\begin{matrix}r cos \left(-{θ}_{A}\left(s\right)\right) \\ r sin \left(-{θ}_{A}\left(s\right)\right) \\ \frac{p}{2 π} - {θ}_{A} \left(s\right)\end{matrix}\right] = \left[\begin{matrix}r cos \left({θ}_{A}\left(s\right)\right) \\ - r sin \left({θ}_{A}\left(s\right)\right) \\ - \frac{p}{2 π} {θ}_{A} \left(s\right)\end{matrix}\right]$

By convention, the parameterisation *r_{B}* (*s*) of the second sensor 716 along the Z-axis is kept positive to enable the helical arrangement 110 and the helical arrangement 118 to be wound in the opposite manner around the central axis 114 of the continuum robot 702. In an example, this could be done by making the pitch p negative for the helical arrangement 118. The Z-axis may lie along the backbone 124 of the continuum robot 702.

### Straight Configuration:

When the backbone 124/the central axis 114 of the continuum robot 702 experiences the twist *τ*(*s*) about the central axis 114, a straight core fibre placed along the central axis 114 inherits the twist *τ*(*s*) as its own torsion *τ_{f_{straight}}*(*s*). ${τ}_{{f}_{straight}} \left(s\right) = τ \left(s\right)$

### Helix Configuration:

In contrast, if the first and second sensors 706, 716 are wrapped helically, a portion of the twist *τ*(*s*) of the continuum robot 702 is manifested as local curvature *κ*(*s*) and torsion in the continuum robot 702.

A simplified relationship (for small bends and uniform geometry) can be written as: ${τ}_{f} \left(s\right) = τ \left(s\right) cos \left(α\right) - κ \left(s\right) sin \left(α\right)$ where, *τ_{f}*(*s*) is the torsion that the first and second sensors 706, 716 actually experiences, *κ*(*s*) curvature of the continuum robot 702 at the arc length *s*, and *α* is the pitch angle of the corresponding helical arrangement 110, 118 that can be calculated as: $α = arctan \left(\frac{p}{2 πr}\right)$

Thus, the torsion *τ_{f},_{A}* (*s*) in the helical arrangement 110 of the first sensor 706 can be described as: ${τ}_{f , A} \left(s\right) = τ \left(s\right) cos \left({α}_{A}\right) - κ \left(s\right) sin \left({α}_{A}\right)$

Similarly, the torsion *τ_{f},_{B}* (*s*) in the helical arrangement 118 of the second sensor 716 can be described as: ${τ}_{f , B} \left(s\right) = τ \left(s\right) cos \left({α}_{B}\right) + κ \left(s\right) sin \left({α}_{B}\right)$ where, *α_{A}* and *α_{B}* denote the pitch angle of the helical arrangement 110 of the first sensor 706 and the helical arrangement 118 of the second sensor 716, respectively. Hence, if the curvature *κ*(*s*), or the twist *τ*(*s*) of the continuum robot 702 changes sign or direction, one helical arrangement 110 experiences an increase in effective torsion while the other helical arrangement 118 experiences a decrease in effective torsion. While these equations are simplified, they capture the opposite effects of the curvature f the first sensor 706 and the curvature of the second sensor 716.

### Novel Benefit for Sensing:

If the two helical arrangements 110, 118 includes the FBG sensors, the respective strain profiles to solve for the twist *τ*(*s*) and the curvature *κ*(*s*) may be combined by summing the torsion *τ_{f},_{A}* (*s*) and the torsion *τ_{f},_{B}* (*s*) or taking the difference yields expressions isolating the twist *τ*(*s*) and the curvature *κ*(*s*) of the continuum robot 702.
Sum: ${τ}_{f , A} \left(s\right) + {τ}_{f , B} \left(s\right) = 2 τ \left(s\right) cos \left(α\right)$
Difference:
${τ}_{f , A} \left(s\right) - {τ}_{f , B} \left(s\right) = 2 κ \left(s\right) sin \left(α\right)$

From a pair of direct measurements, it is possible to solve for both the twist *τ*(*s*) and the curvature *κ*(*s*) of the continuum robot 702 without ambiguity, thereby vastly improving shape sensing accuracy for small bends. Further the torsions *τ_{f},_{A}* (*s*) and *τ_{f},_{B}* (*s*) could be swapped for directly measured strains from the individual grating, where torsional strains *ε_{A}*(*s*)*,ε_{B}*(*s*) for the first sensor 706 and the second sensor 716 along the arc length s can be assumed: ${ϵ}_{A} \left(s\right) = C ∗ {τ}_{f , A} \left(s\right)$ ${ϵ}_{B} \left(s\right) = C ∗ {τ}_{f , B} \left(s\right)$ where, C is a constant that depends on the geometry and material properties of the helical arrangements 110, 118. The constant C may include shear modulus of the first and second sensors 706, 716.

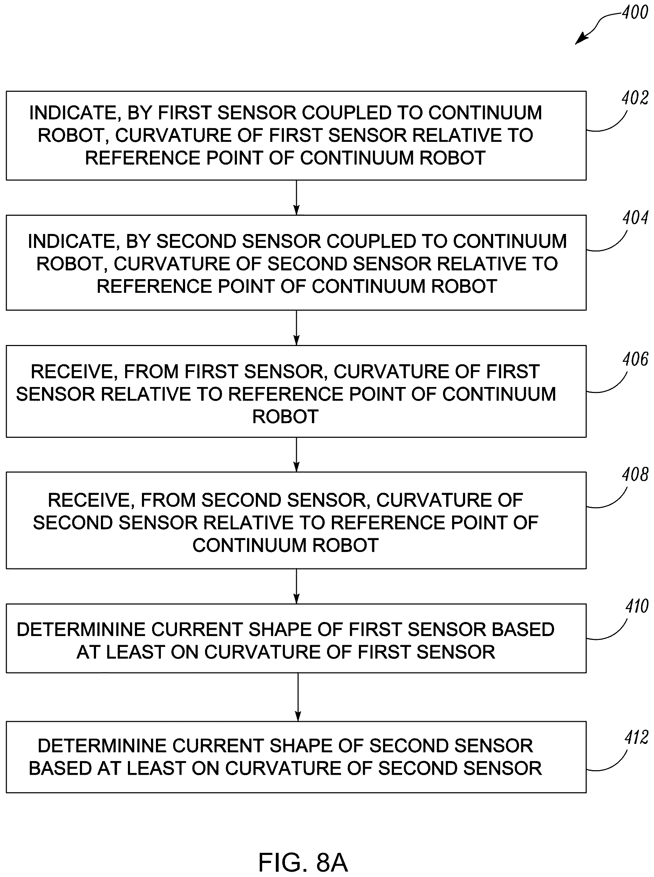

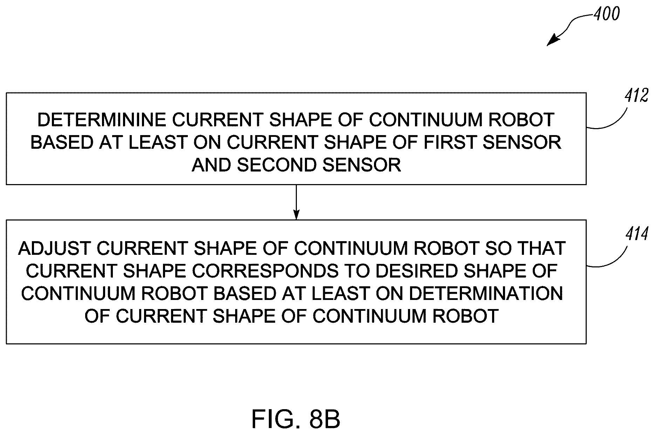

**FIGS. 8A** **and** **8B** show a flowchart of a method 400 for controlling the continuum robot 102, 202, 302, 702 whilst inspecting or repairing the component 104. The method 400 will now be described with reference to FIGS. 1 to 8B.

At step 402, the method 400 includes indicating, by the first sensor 106, 206, 306, 706 coupled to the continuum robot 102, 202, 302, 702, the curvature of the first sensor 106, 206, 306, 706 relative to the reference point 108 of the continuum robot 102, 202, 302, 702. The first sensor 106, 206, 306, 706 is disposed in the helical arrangement 110 relative to the central axis 114 of the continuum robot 102, 202, 302, 702, and the first sensor 106, 206, 306, 706 extending along the first helical direction 112 relative to the central axis 114.

At step 404, the method 400 further includes indicating, by the second sensor 116, 216, 316, 716 coupled to the continuum robot 102, 202, 302, 702, the curvature of the second sensor 116, 216, 316, 716 relative to the reference point 108 of the continuum robot 102, 202, 302, 702. The second sensor 116, 216, 316, 716 is disposed in the helical arrangement 118 relative to the central axis 114 of the continuum robot 102, 202, 302, 702, and the second sensor 116, 216, 316, 716 extending along the second helical direction 120 relative to the central axis 114 that is different from the first helical direction 112. Each of the first sensor 106, 206, 306, 706 and the second sensor 116, 216, 316, 716 includes the FBG sensor.

In an embodiment, the continuum robot 702 includes the backbone 124 having the plurality of vertebrae 126 and the plurality of tendons 128 circumferentially arranged around the backbone 124 at various angular positions. The plurality of tendons 128 include the first tendon 138 disposed in the helical arrangement 110 relative to the central axis 114 of the continuum robot 702), the first tendon 138 extending along the first helical direction 112 relative to the central axis 114), the first sensor 706 being coupled to the first tendon 138. The plurality of tendons 128 also include the second tendon 140 disposed in the helical arrangement 118 relative to the central axis 114), the second tendon 140 extending along the second helical direction 120 relative to the central axis 114), the second sensor 716 being coupled to the second tendon 140.

In another embodiment, the continuum robot 102, 202, 302 includes the backbone 124 having the plurality of vertebrae 126 and the plurality of tendons 128 circumferentially arranged around the backbone 124 at various angular positions, the first sensor 106, 206, 306 being the tendon from the plurality of tendons 128 and the second sensor 116, 216, 316 being another tendon from the plurality of tendons 128.

In an embodiment, the first helical direction 112 includes the clockwise direction relative to the central axis 114 of the continuum robot 102, 202, 302, 702 and the second helical direction 120 includes the anticlockwise direction relative to the central axis 114.

In another embodiment, the first helical direction 112 includes the anticlockwise direction relative to the central axis 114 of the continuum robot 102, 202, 302, 702 and the second helical direction 120 includes the clockwise direction relative to the central axis 114.

At step 406, the method 400 further includes receiving, from the first sensor 106, 206, 306, 706, the curvature of the first sensor 106, 206, 306, 706 relative to the reference point 108 of the continuum robot 102, 202, 302, 702.

At step 408, the method 400 further includes receiving, from the second sensor 116, 216, 316, 716, the curvature of the second sensor 116, 216, 316, 716 relative to the reference point 108 of the continuum robot 102, 202, 302, 702.

At step 410, the method 400 further includes determining the current shape of the first sensor 106, 206, 306, 706 based at least on the curvature of the first sensor 106, 206, 306, 706.

At step 412, the method 400 further includes determining the current shape of the second sensor 116, 216, 316, 716 based at least on the curvature of the second sensor 116, 216, 316, 716.

In an embodiment, the method 400 further includes a step of determining the first curvature angle *θ_{A}*(*s*) of the first sensor 106, 206, 306, 706. The method 400 further includes a step of determining a second curvature angle *θ_{B}*(*s*) of the second sensor 116, 216, 316, 716. The method 400 further includes a step of determining the current shape of the continuum robot 102, 202, 302, 702 based at least on the first curvature angle *θ_{A}*(*s*) and the second curvature angle *θ_{B}*(*s*).

At step 414, the method 400 further includes determining the current shape of the continuum robot 102, 202, 302, 702 based at least on the current shape of the first sensor 106, 206, 306, 706 and the second sensor 116, 216, 316, 716.

In an embodiment, the method 400 further includes a step of determining at least one of a twist *τ*(*s*) in the continuum robot 102, 202, 302, 702 and the torsion *τ_{f}*(*s*) in the first sensor 106, 206, 306, 706 and the second sensor 116, 216, 316, 716. The method 400 further includes a step of determining the current shape of the continuum robot 102, 202, 302, 702 based at least on the current shape of the first sensor 106, 206, 306, 706, the current shape of the second sensor 116, 216, 316, 716, and at least one of the twist *τ*(*s*) in the continuum robot 102, 202, 302, 702 and the torsion *τ_{f}*(*s*) in the first sensor 106, 206, 306, 706 and the second sensor 116, 216, 316, 716.

At step 416, the method 400 further includes adjusting the current shape of the continuum robot 102, 202, 302, 702 so that the current shape corresponds to the desired shape of the continuum robot 102, 202, 302, 702 based at least on the determination of the current shape of the continuum robot 102, 202, 302, 702.

In an example, the method 400 may be partly executed by the controller 122 (see FIG. 7). For example, the steps 404 to 416 may be executed by the controller 122.

Referring to FIGS. 2A to 8B, the system 100, 200, 300, 700 and the method 400 improves a shape sensing/ control accuracy of the continuum robot 102, 202, 302, 702 by adjusting the current shape of the continuum robot 102, 202, 302, 702 to the desired shape based on the determination of the current shape of the continuum robot 102, 202, 302, 702. The helical arrangements 110, 118 of the first sensor 106, 206, 306, 706 and the second sensor 116, 216, 316, 716 may reduce damping, and thus, the system 100, 200, 300, 700 and the method 400 may apply where friction is a concern, due to longer path lengths, usage of lubricants, usage of coatings, and/or usage of low-friction channel liners. The system 100, 200, 300, 700 and the method 400 may correct the shape of the continuum robot 102, 202, 302, 702 without the need of a complex, or data-driven methods, thereby enabling repeatability and robustness.

Based on incorporation of the first and second sensors 106, 206, 306, 706, 116, 216, 316, 716, each winding in the opposite helical direction 112, 120, torsional strains that accumulate in one of the first and second sensors 106, 206, 306, 706, 116, 216, 316, 716 is partially offset in the other. Thus, the first sensor 106, 206, 306, 706 and the second sensor 116, 216, 316, 716 that are wound in opposing helical arrangements 110, 118 (i.e., along opposing helical directions 112, 120) relative to the central axis 114 of the continuum robot 102, 202, 302, 702 may reduce or offset torsional loads, twisting, and/or curving moments in the continuum robot 102, 202, 302, 702. Further, the system 100, 200, 300, 700 and the method 400 compensates for multi-directional twists or variations in local curvature in the continuum robot 102, 202, 302, 702 based on an offset of the torsional strains that accumulate in any one of the first sensor 106, 206, 306, 706 and the second sensor 116, 216, 316, 716 with the other.

Further, the system 100, 200, 300, 700 and the method 400 works well for the continuum robots 102, 202, 302, 702, and/or any other flexible string-like device that may be used in inspection and repair of components of engines, automobiles, aerospace applications, medicinal applications, or any other environments. Some examples of application of the system 100, 200, 300, 700 and the method 400 of the present invention may include minimally invasive surgery, search and rescue operations, and so on. Further, the system 100, 200, 300, 700 and the method 400 may provide shape sensing of flexible robots (such as, pneumatically actuated or concentric tube robots), flexible devices (such as, an endoscope or a borescope), and so on. The system 100, 200, 300, 700 and the method 400 may work well for active continuum robots 102, 202, 302, 702 possessing both an active and a passive section, such as Continuum robot for Flexible Operations (COBRA) robot.

The system 100, 200, 300, 700 and the method 400 may operate in real-time during the repair or inspection of the component and may allow monitoring and optimizing of the repair operation being performed on the component 104. Further, the system 100, 200, 300, 700 and the method 400 may enhance a service life of the continuum robot 102, 202, 302, 702 via reduction in wear and tear of the components of the continuum robot 102, 202, 302, 702 such as the tendons 128, 138, 140 of the continuum robot 102, 202, 302, 702. Furthermore, the system 100, 200, 300, 700 and the method 400 may enhance a performance of the inspection or repair of the component 104. Specifically, the system 100, 200, 300 and the method 400 may provide a balanced torque in the continuum robot 102, 202, 302, 702 that is essential for symmetrical or coordinated movements during inspection or repair of the component 104.

It will be understood that the invention is not limited to the embodiments above-described and various modifications and improvements can be made without departing from the concepts described herein. Except where mutually exclusive, any of the features may be employed separately or in combination with any other features and the invention extends to and includes all combinations and sub-combinations of one or more features described herein.

## Claims

1. A system (100, 200, 300, 700) for controlling a continuum robot (102, 202, 302, 702) whilst inspecting or repairing a component (104), the system (100, 200, 300, 700) comprising:
a first sensor (106, 206, 306, 706) that includes a Fibre Bragg grating (FBG) sensor and is coupled to the continuum robot (102, 202, 302, 702), the first sensor (106, 206, 306, 706) being configured to indicate a curvature of the first sensor (106, 206, 306, 706) relative to a reference point (108) of the continuum robot (102, 202, 302, 702), the first sensor (106, 206, 306, 706) being disposed in a helical arrangement (110) relative to a central axis (114) of the continuum robot (102, 202, 302, 702), and the first sensor (106, 206, 306, 706) extending along a first helical direction (112) relative to the central axis (114);
a second sensor (116, 216, 316, 716) that includes a Fibre Bragg grating (FBG) sensor and is coupled to the continuum robot (102, 202, 302, 702), the second sensor (116, 216, 316, 716) being configured to indicate a curvature of the second sensor (116, 216, 316, 716) relative to the reference point (108) of the continuum robot (102, 202, 302, 702), the second sensor (116, 216, 316, 716) being disposed in a helical arrangement (118) relative to the central axis (114) of the continuum robot (102, 202, 302, 702), and the second sensor (116, 216, 316, 716) extending along a second helical direction (120) relative to the central axis (114) that is different from the first helical direction (112); and
a controller (122) communicably coupled with the first sensor (106, 206, 306, 706) and the second sensor (116), wherein the controller (122) is configured to:
receive, from the first sensor (106), the curvature of the first sensor (106, 206, 306, 706) relative to the reference point (108) of the continuum robot (102, 202, 302, 702);
receive, from the second sensor (116), the curvature of the second sensor (116, 216, 316, 716) relative to the reference point (108) of the continuum robot (102, 202, 302, 702);
determine a current shape of the first sensor (106, 206, 306, 706) based at least on the curvature of the first sensor (106);
determine a current shape of the second sensor (116, 216, 316, 716) based at least on the curvature of the second sensor (116);
determine a current shape of the continuum robot (102, 202, 302, 702) based at least on the current shape of the first sensor (106, 206, 306, 706) and the second sensor (116); and
adjust the current shape of the continuum robot (102, 202, 302, 702) so that the current shape corresponds to a desired shape of the continuum robot (102, 202, 302, 702) based at least on the determination of the current shape of the continuum robot (102, 202, 302, 702).

2. The system (100, 200, 300, 700) of claim 1, wherein each of the first sensor (106, 206, 306, 706) and the second sensor (116, 216, 316, 716) includes a single-core FBG sensor, a multi-core FBG sensor, or a FBG sensor including multiple core fibers.

3. The system (100, 200, 300, 700) of claim 1 or 2, wherein the curvature of each of the first sensor (106, 206, 306, 706) and the second sensor (116, 216, 316, 716) is determined along each of an X-axis, a Y-axis, and a Z-axis of the continuum robot (102, 202, 302, 702).

4. The system (100, 200, 300, 700) of any preceding claim, wherein the first helical direction (112) includes a clockwise direction relative to the central axis (114) of the continuum robot (102, 202, 302, 702) and the second helical direction (120) includes an anticlockwise direction relative to the central axis (114); or the first helical direction (112) includes an anticlockwise direction relative to the central axis (114) of the continuum robot (102, 202, 302, 702) and the second helical direction (120) includes a clockwise direction relative to the central axis (114).

5. The system (100, 200, 300, 700) of any preceding claim, wherein the continuum robot (102, 202, 302, 702) includes a backbone (124) having a plurality of vertebrae (126) and a plurality of tendons (128) circumferentially arranged around the backbone (124) at various angular positions, the first sensor (106, 206, 306, 706) and the second sensor (116, 216, 316, 716) being disposed proximal to the backbone (124) of the continuum robot (102, 202, 302, 702) and/or proximal to an outer surface (130) defined by the continuum robot (102, 202, 302, 702).

6. The system (700) of claim 5, wherein the plurality of tendons (128) include:
a first tendon (138) disposed in the helical arrangement (110) relative to the central axis (114) of the continuum robot (702), the first tendon (138) extending along the first helical direction (112) relative to the central axis (114), the first sensor (706) being coupled to the first tendon (138); and
a second tendon (140) disposed in the helical arrangement (118) relative to the central axis (114), the second tendon (140) extending along the second helical direction (120) relative to the central axis (114), the second sensor (716) being coupled to the second tendon (140).

7. The system (100, 200, 300) of claim 5, wherein the first sensor (106, 206, 306) is a tendon from the plurality of tendons (128) and the second sensor (116, 216, 316) is another tendon from the plurality of tendons (128).

8. The system (100, 200, 300, 700) of any preceding claim, wherein the reference point (108) is defined at the backbone (124) of the continuum robot (102, 202, 302, 702).

9. The system (100, 200, 300, 700) of any preceding claim, wherein the controller (122) also is configured to:
determine at least one of a twist (τ(*s*)) in the continuum robot (102, 202, 302, 702) and a torsion (*τ_{f}*(*s*)) in the first sensor (106, 206, 306, 706) and the second sensor (116, 216, 316, 716); and
determine the current shape of the continuum robot (102, 202, 302, 702) based at least on the current shape of the first sensor (106), the current shape of the second sensor (116), and at least one of the twist (*τ*(*s*)) in the continuum robot (102, 202, 302, 702) and the torsion (*τ_{f}*(*s*)) in the first sensor (106, 206, 306, 706) and the second sensor (116, 216, 316, 716)).

10. The system (100, 200, 300, 700) of any preceding claim, wherein the controller (122) is also configured to:
determine a first curvature angle (*θ_{A}*(*s*)) of the first sensor (106);
determine a second curvature angle (*θ_{B}*(*s*)) of the second sensor (116); and
determine the current shape of the continuum robot (102, 202, 302, 702) based at least on the first curvature angle ${\left〚\left(θ\right.\right〛}_{A} \left(s\right)$) and the second curvature angle ${\left〚\left(θ\right.\right〛}_{B} \left(s\right)$).

11. The system (100, 200, 300, 700) of any preceding claim, wherein the component (104) is a gas turbine engine (100) component.

12. The system (100, 200, 300, 700) of any preceding claim, wherein the first sensor (106, 206, 306, 706) has a first pitch angle (*α*_*A*) and the second sensor (116, 216, 316, 716) has a second pitch angle (*α_B*), the first pitch angle (*α_A*) being same as the second pitch angle (*α_B*) or the first pitch angle (*α_A*) being different from the second pitch angle (*α_B*).

13. A method (400) for controlling a continuum robot (102, 202, 302, 702) whilst inspecting or repairing a component (104), the method (400) comprising the steps of:
indicating, by a first sensor (106, 206, 306, 706) that includes a Fibre Bragg grating (FBG) sensor and is coupled to the continuum robot (102, 202, 302, 702), a curvature of the first sensor (106, 206, 306, 706) relative to a reference point (108) of the continuum robot (102, 202, 302, 702), the first sensor (106, 206, 306, 706) being disposed in a helical arrangement (110) relative to a central axis (114) of the continuum robot (102, 202, 302, 702), and the first sensor (106, 206, 306, 706) extending along a first helical direction (112) relative to the central axis (114);
indicating, by a second sensor (116, 216, 316, 716) that includes a Fibre Bragg grating (FBG) sensor and is coupled to the continuum robot (102, 202, 302, 702), a curvature of the second sensor (116, 216, 316, 716) relative to the reference point (108) of the continuum robot (102, 202, 302, 702), the second sensor (116, 216, 316, 716) being disposed in a helical arrangement (118) relative to the central axis (114) of the continuum robot (102, 202, 302, 702), and the second sensor (116, 216, 316, 716) extending along a second helical direction (120) relative to the central axis (114) that is different from the first helical direction (112);
receiving, from the first sensor (106), the curvature of the first sensor (106, 206, 306, 706) relative to the reference point (108) of the continuum robot (102, 202, 302, 702);
receiving, from the second sensor (116), the curvature of the second sensor (116, 216, 316, 716) relative to the reference point (108) of the continuum robot (102, 202, 302, 702);
determining a current shape of the first sensor (106, 206, 306, 706) based at least on the curvature of the first sensor (106);
determining a current shape of the second sensor (116, 216, 316, 716) based at least on the curvature of the second sensor (116);
determining a current shape of the continuum robot (102, 202, 302, 702) based at least on the current shape of the first sensor (106, 206, 306, 706) and the second sensor (116); and
adjusting the current shape of the continuum robot (102, 202, 302, 702) so that the current shape corresponds to a desired shape of the continuum robot (102, 202, 302, 702) based at least on the determination of the current shape of the continuum robot (102, 202, 302, 702).

14. The method (400) of claim 13, further comprising:
determining a first curvature angle ${\left〚\left(θ\right.\right〛}_{A} \left(s\right)$) of the first sensor (106);
determining a second curvature angle ${\left〚\left(θ\right.\right〛}_{B} \left(s\right)$) of the second sensor (116); and
determining the current shape of the continuum robot (102, 202, 302, 702) based at least on the first curvature angle ${\left〚\left(θ\right.\right〛}_{A} \left(s\right)$) and the second curvature angle ${\left〚\left(θ\right.\right〛}_{B} \left(s\right)$).

15. The method (400) of claim 13 or 14, further comprising:
determining at least one of a twist (*τ*(*s*)) in the continuum robot (102, 202, 302, 702) and a torsion (*τ_{f}*(*s*)) in the first sensor (106, 206, 306, 706) and the second sensor (116, 216, 316, 716); and
determining the current shape of the continuum robot (102, 202, 302, 702) based at least on the current shape of the first sensor (106), the current shape of the second sensor (116), and at least one of the twist (*τ*(*s*)) in the continuum robot (102, 202, 302, 702) and the torsion (*τ_{f}*(*s*)) in the first sensor (106, 206, 306, 706) and the second sensor (116, 216, 316, 716).
